(19) Europäisches Patentamt
European Patent Office
Office européen des brevets

(11) **EP 4 600 684 A1**

(12) **EUROPÄISCHE PATENTANMELDUNG**

(43) Veröffentlichungstag:
**13.08.2025   Patentblatt 2025/33**

(21) Anmeldenummer: 24213439.3

(22) Anmeldetag: **15.11.2024**

(51) Internationale Patentklassifikation (IPC):
**G01S 3/46** (2006.01)       **G01S 3/04** (2006.01)
**H01Q 21/20** (2006.01)       **H01Q 21/28** (2006.01)

(52) Gemeinsame Patentklassifikation (CPC):
**G01S 3/48; H01Q 21/20;** G01S 3/043; H01Q 21/28

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **07.02.2024   DE 102024000394**

(71) Anmelder: **MBDA Deutschland GmbH
86529 Schrobenhausen (DE)**

(72) Erfinder:
• **BAUR, Sebastian
86529 Schrobenhausen (DE)**
• **STILLER, Axel
81375 München (DE)**
• **GERDES, Lennart
85652 Pliening (DE)**

(74) Vertreter: **Isarpatent
Patent- und Rechtsanwälte
Barth Hassa Peckmann & Partner mbB
Friedrichstraße 31
80801 München (DE)**

(54) **INTERFEROMETRISCHES VERFAHREN UND ANTENNENANORDNUNG ZUM BESTIMMEN EINER EINFALLSRICHTUNG VON ELEKTROMAGNETISCHER STRAHLUNG**

(57)     Die vorliegende Erfindung betrifft eine Antennenanordnung mit einem ersten Antennenelement ($A_1$), einem zweiten Antennenelement ($A_2$), einem dritten Antennenelement ($A_3$), und einem vierten Antennenelement ($A_4$), die nicht-koplanar angeordnet und zum Detektieren von Signalen von einer einfallenden elektromagnetischen Welle konfiguriert sind. Die Antennenanordnung umfasst einen Prozessor, der zum Bestimmen einer Einfallsrichtung der elektromagnetischen Welle unter Verwendung der detektierten Signale konfiguriert ist.

Fig. 2

EP 4 600 684 A1

**Beschreibung**

TECHNISCHES GEBIET DER ERFINDUNG

Die Erfindung betrifft ein interferometrisches Verfahren und eine Antennenanordnung zum Bestimmen einer Einfallsrichtung von elektromagnetischer Strahlung, insbesondere eine nicht-koplanare Antennenanordnung in drei Dimensionen.

HINTERGRUND DER ERFINDUNG

Bekannte Verfahren zum Bestimmen der Einfallsrichtung elektromagnetischer Strahlung erfordern bei einer Verwendung von vier oder mehr Antennenelementen in einer Antennenanordnung einen hohen Rechenaufwand, um die Einfallsrichtung präzise zu bestimmen. Mit Antennenanordnungen in zwei Dimensionen kann der Rechenaufwand sehr groß werden. Mehrdeutigkeiten aufgrund eines möglichen Gangunterschiedes zwischen Antennenelementen können zudem nicht immer *a priori* ausgeschlossen werden, was bspw. ein Überprüfen von mehreren bestimmten Einfallsrichtungen erforderlich machen kann, um die tatsächliche Einfallsrichtung zu bestimmen. Mehrdeutigkeiten müssen somit bei einer Richtungsschätzung aufgelöst werden, um die Einfallsrichtungen eindeutig zu bestimmen.

In anderen Worten kann die Komplexität der Bestimmung der Einfallsrichtung elektromagnetischer Strahlung in Abhängigkeit von den gewählten Verfahren und/oder Antennenanordnung zu hohen Anforderungen an die Rechenleistung eines Radarsuchkopfs, von bspw. einem Flugkörper und/oder damit assoziierten Systemen führen, die mit anderen Anforderungen an eine Dimensionierung, wie bspw. ein Volumen, eine Form und/oder ein Gewicht usw., des Flugkörpers und/oder der assoziierten Systeme nicht oder nur schwer vereinbar sind. Im Falle eines Flugkörpers kann die erforderliche Reduktion der Komplexität der Bestimmung der Einfallsrichtung elektromagnetischer Strahlung bspw. dazu führen, dass die Antennenelemente in einer Ebene angeordnet werden müssen, was eine erhebliche Einschränkung im aerodynamischen Design von Flugkörpern bedeuten kann, insbesondere bei vergleichsweise kleinen und/oder komplex geformten Flugkörpern.

Es wäre daher wünschenswert ein Verfahren und eine Vorrichtung bereitzustellen welches mit einem geringen rechnerischen Aufwand eine präzise und eindeutige Bestimmung einer Einfallsrichtung elektromagnetischer Strahlung ermöglicht, ohne dass Abstriche bei der optimalen Dimensionierung des mit der Vorrichtung assoziierten Systems erforderlich sind.

Ly, P. Q. C., Fast and unambiguous direction finding for digital radar intercept receivers, 2013, Doktorarbeit, offenbart Verfahren und Antennenanordnungen zum Bestimmen eines Einfallswinkels (*angle-of-arrival,* AOA) im Zusammenhang mit einer Anwendung auf elektronische Überwachungssysteme. Laut Ly müssen die Verfahren rechnerisch schnell und präzise sein und mit großflächigen Anordnungen mit wenigen Kanälen implementiert werden, um den Anforderungen für den Betrieb solcher Systeme zu genügen. Ly schlägt hierzu ein interferometrisches Verfahren vor, wobei das Verfahren auch darauf gerichtet ist Mehrdeutigkeiten beim Bestimmen des Einfallswinkels auf eine rechnerisch effiziente Weise aufzulösen. Das Verfahren verwendet dazu kollineare und koplanare Antennenanordnungen, während Antennenanordnungen mit drei Dimensionen und entsprechende Verfahren nicht behandelt sind.

US 2006/081050 A1 offenbart ein aufwändiges System und ein Verfahren zum Auflösen von Phasenmehrdeutigkeiten verschiedener Anordnungen von Signalwandlern, einschließlich nicht-koplanarer Interferometerantennen auf einer Bordwand eines Flugzeugs, um die Einfallsrichtung eines Signals zu bestimmen, das von der Anordnung empfangen und von einer von der Anordnung entfernten Quelle ausgesendet wird.

ZUSAMMENFASSUNG DER ERFINDUNG

Die Erfindung ist durch die unabhängigen Ansprüche definiert. Die abhängigen Ansprüche definieren vorteilhafte Ausführungsformen.

Gemäß einem ersten Aspekt der Erfindung umfasst eine Antennenanordnung ein erstes Antennenelement, ein zweites Antennenelement, ein drittes Antennenelement, und ein viertes Antennenelement, die nicht-koplanar angeordnet und zum Detektieren von Signalen von einer einfallenden elektromagnetischen Welle konfiguriert sind; und einen Prozessor, der zum Bestimmen einer Einfallsrichtung der elektromagnetischen Welle unter Verwendung der detektierten Signale konfiguriert ist.

Gemäß einer Weiterbildung liegen das erste Antennenelement und das zweite Antennenelement auf einer ersten Achse eines Koordinatensystems zum Bestimmen der Einfallsrichtung der elektromagnetischen Welle; das erste Antennenelement und das vierte Antennenelement liegen auf einer zweiten Achse des Koordinatensystems; und die erste Achse und die zweite Achse sind orthogonal zueinander.

Gemäß einer Weiterbildung sind ein Abstand des zweiten Antennenelements vom ersten Antennenelement und ein Abstand des vierten Antennenelements vom ersten Antennenelement unterschiedlich.

Gemäß einer Weiterbildung liegt das erste Antennenelement im Ursprung eines Koordinatensystems zum Bestimmen der Einfallsrichtung der elektromagnetischen Welle und das zweite Antennenelement, das dritte Antennenelement, und das vierte Antennenelement in dem Koordinatensystem weisen Koordinaten auf, die jeweils ein ganzzahliges Vielfaches einer Wellenlänge der elektromagnetischen Welle sind.

Gemäß einer Weiterbildung sind die ganzzahligen Vielfachen für jede Koordinate kleiner als 20 und vorzugsweise größer als 1.

Gemäß einer Weiterbildung sind die Abstände des zweiten, dritten und vierten Antennenelements vom ersten Antennenelement alle unterschiedlich.

Gemäß einem zweiten Aspekt der Erfindung umfasst ein Verfahren zum Bestimmen einer Einfallsrichtung einer elektromagnetischen Welle unter Verwendung der oben beschriebenen Antennenanordnung die folgenden Schritte: Bestimmen eines jeweiligen Abstandes zwischen einer Position des ersten Antennenelements und einer Position des ersten, des zweiten und des dritten Antennenelements; Bestimmen von möglichen Mehrdeutigkeiten einer jeweiligen Differenz einer Phase der elektromagnetischen Welle an der Position des ersten Antennenelements und einer Phase der elektromagnetischen Welle an der Position des ersten, des zweiten und des dritten Antennenelements basierend auf dem bestimmten jeweiligen Abstand; Bestimmen von möglichen Polarwinkeln und möglichen Azimutwinkeln für die Einfallsrichtung der elektromagnetischen Welle unter Berücksichtigung der möglichen Mehrdeutigkeiten; Bestimmen eines Tupels der möglichen Azimutwinkel und der möglichen Polarwinkel für welches entweder eine Differenz zwischen zwei Azimutwinkeln für einen Polarwinkel verschwindet oder eine D zwischen zwei Polarwinkeln für einen Azimutwinkel verschwindet.

Gemäß einer Weiterbildung umfasst das Bestimmen von möglichen Polarwinkeln und möglichen Azimutwinkeln für die Einfallsrichtung der elektromagnetischen Welle unter Berücksichtigung der möglichen Mehrdeutigkeiten: Bestimmen der möglichen Polarwinkel für das zweite Antennenelement; Bestimmen der möglichen Azimutwinkel für das dritte Antennenelement unter Verwendung der möglichen Polarwinkel für das zweite Antennenelement; und Bestimmen der möglichen Azimutwinkel für das vierte Antennenelement unter Verwendung der möglichen Polarwinkel für das zweite Antennenelement.

Gemäß einer Weiterbildung umfasst das Bestimmen von möglichen Mehrdeutigkeiten ferner: Bestimmen der möglichen Mehrdeutigkeiten für das dritte Antennenelement mit einer Bestimmung, dass das dritte Antennenelement auf einer neuen Achse des Koordinatensystems zum Bestimmen der Einfallsrichtung der elektromagnetischen Welle liegt; das Bestimmen von möglichen Polarwinkeln und möglichen Azimutwinkeln für die Einfallsrichtung der elektromagnetischen Welle unter Berücksichtigung der möglichen Mehrdeutigkeiten umfasst: Bestimmen der möglichen Polarwinkel für das dritte Antennenelement bezüglich der neuen Achse, und Umrechnen der möglichen Polarwinkel für das dritte Antennenelement in Polarwinkel im ursprünglichen Koordinatensystem zum Bestimmen der Einfallsrichtung der elektromagnetischen Welle oder Umrechnen der möglichen Polarwinkel für das zweite Antennenelement in Polarwinkel bezüglich der neuen Achse des Koordinatensystems zum Bestimmen der Einfallsrichtung der elektromagnetischen Welle; und das Bestimmen des Tupels umfasst: Bestimmen einer Differenz der möglichen Polarwinkel für das zweite Antennenelement und der möglichen Polarwinkel für das dritte Antennenelement unter Berücksichtigung der möglichen Azimutwinkel für das dritte Antennenelement und/oder der möglichen Azimutwinkel für das vierte Antennenelement.

Gemäß einem dritten Aspekt der Erfindung umfasst ein Verfahren zum Bestimmen einer Einfallsrichtung einer elektromagnetischen Welle unter Verwendung der oben beschriebenen Antennenanordnung die folgenden Schritte: mehrdeutiges Berechnen von Polarwinkeln basierend auf einem ersten Antennenpaar der Antennenanordnung in einem ersten Koordinatensystem für die Antennenanordnung; mehrdeutiges Berechnen von Azimutwinkeln für jeden möglichen Polarwinkel, einmal basierend auf einem zweiten Antennenpaar der Antennenanordnung und einmal basierend auf einem dritten Antennenpaar der Antennenanordnung, wobei jedes Antennenpaar eine erste Antenne umfasst; für jeden möglichen Polarwinkel, Auflösen der Mehrdeutigkeiten in den Azimutwinkeln durch Wählen eines Azimutwinkels, so dass der Abstand zwischen den mit dem zweiten Antennenpaar berechneten Azimutwinkeln und mit dem dritten Antennenpaar berechneten Azimutwinkeln minimiert wird; mehrdeutiges Berechnen der Polarwinkel basierend auf dem zweiten Antennenpaar in einem zweiten Koordinatensystem mit einer z-Achse durch die Positionen der Antennen des zweiten Antennenpaares; Umrechnen der zuvor bestimmten Tupels aus Azimut und Polarwinkel im ersten Koordinatensystem in Polarwinkel im zweiten Koordinatensystem; Auflösen der Mehrdeutigkeit des Polarwinkels durch Wählen des Polarwinkels, so dass ein Abstand zwischen den mit dem ersten Antennenpaar und den mit dem zweiten Antennenpaar bestimmten Polarwinkeln minimiert wird; und Wählen des so gewählten Polarwinkels im ersten Koordinatensystem und des zugehörigen zuvor bestimmten Azimutwikels im ersten Koordinatensystem als die Einfallsrichtung.

Gemäß einem vierten dritten Aspekt der Erfindung umfasst ein Flugkörper die oben beschriebene Antennenanordnung.

KURZBESCHREIBUNG DER ZEICHNUNGEN

Im Folgenden wird die Erfindung unter Bezugnahme auf die Figuren der Zeichnungen erläutert. Von den Figuren zeigen:

Fig. 1    Definition des Azimutwinkels $\phi$ und des Polarwinkels $\tau9$ bezüglich einer Einfallsrichtung einer elektromagnetischen Welle in einem Koordinatensystem mit einer orthogonalen Basis *x, y* und z.

Fig. 2    beispielhafte nicht-koplanare Antennenanordnung von vier Antennenelementen in drei Dimensionen gemäß einer Ausführungsform mit einem beispielhaften Einfallsrichtung einer elektromagnetischen Welle, wobei die Koordinaten der Antennenelemente durch Vielfache der Wellenlänge der elektromagnetischen Welle angegeben sind.

Fig. 3    Frontansicht einer beispielhaften Antennenanordnung mit auf einem rotationssymmetrischen Kopf eines Körpers angeordneten Antennenelementen.

Fig. 4    Seitenansicht der beispielhaften Antennenanordnung von Fig. 3.

Fig. 5    Seitenansicht eines Flugkörpers mit einer beispielhaften Antennenanordnung.

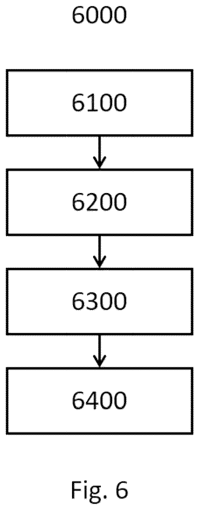

Fig. 6    Verfahren zum Bestimmen einer Einfallsrichtung der elektromagnetischen Welle gemäß einer beispielhaften Ausführungsform.

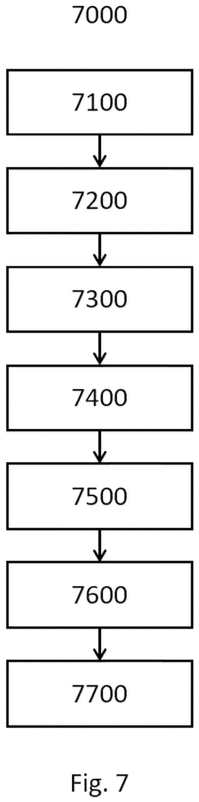

Fig. 7    Verfahren zum Bestimmen einer Einfallsrichtung der elektromagnetischen Welle gemäß einer beispielhaften Ausführungsform.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.
In den Figuren bezeichnen dieselben Bezugszeichen regelmäßig gleiche oder funktionsgleiche Komponenten, soweit nichts anderes angegeben ist.

AUSFÜHRLICHE BESCHREIBUNG VON AUSFÜHRUNGSBEISPIELEN DER ERFINDUNG

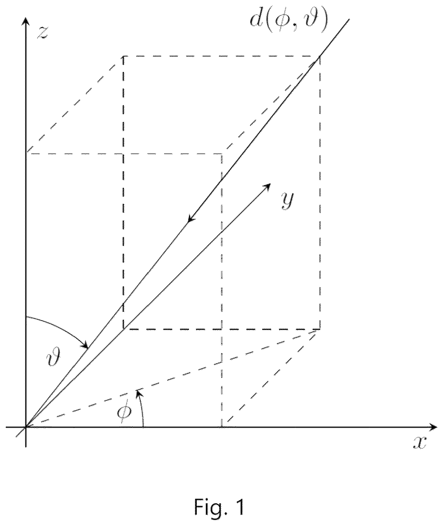

Fig. 1 zeigt die Definition des Azimutwinkels $\phi$ und des Polarwinkels $\vartheta$ bezüglich einer Einfallsrichtung einer elektromagnetischen Welle in einem Koordinatensystem mit einer orthogonalen Basis *x, y* und *z*. Zum Zwecke der Beschreibung und ohne Beschränkung der Allgemeinheit (oBdA) kann die Einfallsrichtung der elektromagnetischen Welle durch den normierten Vektor $d(\phi,\vartheta)$ ausgedrückt werden, mit

$$d(\phi, \vartheta) = \begin{pmatrix} \cos\phi \sin\vartheta \\ \sin\phi \sin\vartheta \\ \cos\vartheta \end{pmatrix} \qquad (1)$$

Der Azimutwinkel $\phi$ bezeichnet dabei den Winkel zwischen der x-Achse und der Projektion der Einfallsrichtung auf die xy-Ebene, während der Polarwinkel $\vartheta$ den Winkel zwischen der z-Achse und der Einfallsrichtung bezeichnet, wie in Fig. 1 gezeigt.

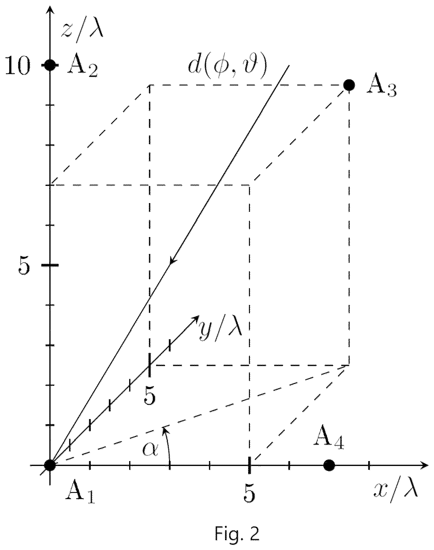

Fig. 2 zeigt eine beispielhafte nicht-koplanare Antennenanordnung von vier Antennenelementen in drei Dimensionen gemäß einer Ausführungsform mit einer beispielhaften Einfallsrichtung einer elektromagnetischen Welle, wobei die Koordinaten der Antennenelemente durch Vielfache der Wellenlänge der elektromagnetischen Welle angegeben sind. Für Radaranwendungen kann ein Bereich von Wellenlängen verwendet werden. Bspw. ein Bereich von Wellenlängen um die Wellenlänge herum.
Wie mit Bezug zur Fig. 2 gezeigt werden die Positionen der Antennenelemente zum Zwecke der Beschreibung und oBdA mit $A_m$ bezeichnet, wobei der tiefgestellte Index $m \in \{1, \cdots, M\}$ mit $M \in \mathbb{N}$ die *m*-te Antenne von insgesamt *M* Antennen bezeichnet. In anderen Worten umfasst die Antennenanordnung *M* Antennenelemente. Ferner wird oBdA angenommen, dass das erste Antennenelement, nachfolgend als Referenzantenne bezeichnet, im Ursprung angeordnet sei, so dass $A_1 = 0$.
Zum Bestimmen der Einfallsrichtung $d(\phi,\vartheta)$ werden die Phasendifferenzen $\psi_{1m}$ zwischen dem Antennenelement m = 1 und den Antennenelementen $m \in \{2, \cdots, M\} = M \setminus \{1\}$ verwendet. Die Phasendifferenz $\psi_{1m}$ ist dabei die Differenz $\psi_m$ - $\psi_1$ der Phase $\psi_m$ der elektromagnetischen Welle an der Position des Antennenelements m mit $m \in M \setminus \{1\}$ und der Phase

$\psi_1$ der elektromagnetischen Welle an der Position des Antennenelements m = 1.

Die Gangunterschiede zwischen dem Antennenelement m = 1 und den Antennenelementen $m \in M \setminus \{1\}$ können also dem Ausdruck

$$\frac{\lambda}{2\pi}(\psi_{1m} + 2\pi\rho_m) \qquad (2)$$

entsprechen, wobei $\lambda$ die Wellenlänge der elektromagnetischen Welle, bspw. im Bereich zwischen. 30 MHz und 300 GHz, bezeichnet und $\rho_m$ für die möglichen ganzzahligen Vielfachen der Wellenlänge steht, die in Richtung der einfallenden elektromagnetischen Welle zwischen dem Antennenelement $m = 1$ und dem Antennenelement $m \in M \setminus \{1\}$ liegen. Bezüglich der Referenzantenne gelten somit die Beziehungen

$$\psi_{1m} + 2\pi\rho_{1m} = \frac{2\pi}{\lambda} \langle d(\phi,\vartheta)|A_m \rangle \qquad (3)$$

wobei $m \in M \setminus \{1\}$ und $\langle \cdot \mid \cdot \rangle$ das Skalarprodukt bezeichnet. Die Menge der möglichen Zahlen $\rho_{1m}$ steht für die möglichen Mehrdeutigkeiten bei der Wellenlänge $\lambda$ aufgrund des Gangunterschiedes zwischen der Referenzantenne und dem Antennenelement $m \in M \setminus \{1\}$. Für die ganzen Zahlen $\rho_{1m}$ und mit der Referenzantenne im Ursprung $A_1 = 0$ gilt jedenfalls die Beziehung

$$\left\lceil -\frac{\|A_m\|}{\lambda} - \psi_{1m} \right\rceil \leq \rho_{1m} \leq \left\lfloor \frac{\|A_m\|}{\lambda} - \psi_{1m} \right\rfloor \qquad (4)$$

wobei $\lceil \cdot \rceil$ und $\lfloor \cdot \rfloor$ die Auf- und Abrundungsfunktion und $\|\cdot\|$ die Standardnorm bezeichnen. $P_m$ bezeichne fortan die Menge der möglichen ganzen Zahlen $\rho_{1m}$, welche die Bedingung (4) erfüllt.

Für die in der Fig. 2 gezeigte vorteilhafte Antennenanordnung, in welcher die Position $A_2$ des Antennenelements m = 2 auf der z-Achse des skalierten Koordinatensystems liegt, ist $\langle d(\phi,\vartheta)|A_2 \rangle = (A_2)_z \cos\vartheta$, wobei $(A_2)_z$ die z-Komponente des Vektors $A_2$ bezeichnet. Folglich ergibt sich mit der Beziehung (3) aufgrund der Mehrdeutigkeiten $P_2$ für die möglichen Winkel $\vartheta$ bezüglich der z-Achse durch die Position $A_2$ des Antennenelements m = 2 die Menge

$$\vartheta_{12}^z := \left\{ \vartheta = \cos^{-1}\left( \left( \frac{\psi_{12}}{2\pi} + \rho_{12} \right) \frac{\lambda}{(A_2)_z} \right); \rho_{12} \in P_2 \right\} \qquad (5)$$

Für die Position $A_3$ des Antennenelements m = 3 ergibt sich mit der Beziehung (3), den Mehrdeutigkeiten $P_3$ und unter Verwendung des Winkels $\alpha$ zwischen der x-Achse und der Projektion der Position $A_3$ auf die xy-Ebene für die möglichen Winkel $\phi$ die Menge

$$\phi_{13} := \left\{ \phi = \alpha + \cos^{-1}\left( \frac{\left( (\psi_{13} + 2\pi\rho_{13})\frac{\lambda}{2\pi} - (A_3)_z \cos\vartheta \right)}{\sin\vartheta \sqrt{(A_3)_x^2 + (A_3)_y^2}} \right); \rho_{13} \in P_3 \right\} \qquad (6)$$

Weil die Position $A_4$ des Antennenelements m = 4 auf der x-Achse des in Fig. 2 gezeigten skalierten Koordinatensystems liegt gilt für dieses Antennenelement $\langle d(\phi,\vartheta)|A_4 \rangle = (A_4)_x \cos\phi \sin\vartheta$, wobei $(A_4)_x$ die x-Komponente des Vektors $A_4$ bezeichnet. Folglich ergibt sich mit der Beziehung (3) aufgrund der Mehrdeutigkeiten $P_4$ für die möglichen Winkel $\phi$ die Menge

$$\phi_{14}^x := \left\{ \phi = \cos^{-1}\left( \frac{(\psi_{14} + 2\pi\rho_{14})}{(A_4)_x \sin\vartheta} \frac{\lambda}{2\pi} \right); \rho_{14} \in P_4 \right\} \qquad (7)$$

Die möglichen Winkel $\phi$ lassen sich also für alle Winkels $\vartheta$ der Menge $\vartheta_{12}^{z}$ sowohl mit der Beziehung (6) als auch der Beziehung (7) bestimmen. Da der wahre Winkel $\phi$ für den wahren Winkel $\vartheta$ in beiden Mengen $\phi_{13}$ und $\phi_{14}^{x}$ enthalten sein muss, muss für den wahren Winkel $\phi$ die Differenz von einem gemäß der Beziehung (6) bestimmten Winkel $\phi$ und einem gemäß der Beziehung (7) bestimmten Winkel $\phi$ für einen Winkel $\vartheta$ der Menge $\vartheta_{12}^{z}$ verschwinden. Folglich können der wahre Azimutwinkel $\phi$ und der wahre Polarwinkel $\vartheta$ bspw. bestimmt werden, indem in der Produktmenge $\vartheta_{12}^{z} \otimes \phi_{13} \otimes \phi_{14}^{x}$ das Tripel $(\vartheta, \phi, \phi)$ gesucht wird, welches die minimale Differenz aufweist, in Symbolen bspw.:

$$\min_{(\vartheta,\phi,\phi)\in\vartheta_{12}^{z}\otimes\phi_{13}\otimes\phi_{14}^{x}} |\phi \in \phi_{13} - \phi \in \phi_{14}^{x}| \qquad (8)$$

wobei $|\cdot|$ die Betragsfunktion bezeichnet. In anderen Worten kann die Richtung gewählt werden, für welche die oben genannten Differenzen (Winkeldifferenzen) minimal sind, d.h. die Richtung von den mehreren möglichen Richtungen, die am besten zu zwei an verschiedenen Antennenpaaren gemessenen Phasendifferenzen passt. Die Mehrdeutigkeit des Azimutwinkels $\phi$ kann zuerst aufgelöst werden, dann die Mehrdeutigkeit des Polarwinkels $\vartheta$.

Alternativ oder ergänzend können der wahre Azimutwinkel $\phi$ und der wahre Polarwinkel $\vartheta$ bspw. auch bestimmt werden, indem die z-Achse durch die Position $A_3$ des Antennenelements $m = 3$ gelegt wird. Mit dieser vorteilhaften Wahl ergibt sich mit der Beziehung (3) aufgrund der Mehrdeutigkeiten $P_3$ für die möglichen Winkel $\vartheta$ bezüglich der z-Achse durch die Position $A_3$ des Antennenelements m = 3 die Menge

$$\vartheta_{13}^{z} := \left\{ \vartheta = \cos^{-1}\left( \left( \frac{\psi_{13}}{2\pi} + \rho_{13} \right) \frac{\lambda}{\|A_3\|} \right); \rho_{13} \in P_3 \right\} \qquad (9)$$

Die aus der Menge $\vartheta_{12}^{z}$ gemäß der Beziehung (5) bestimmten Winkel $\vartheta$ bezüglich der z-Achse durch die Position $A_2$ des Antennenelements $m = 2$ können in die entsprechen Winkel $\vartheta$ bezüglich der z-Achse durch die Position $A_3$ des Antennenelements $m = 3$ umgerechnet werden. Dies kann bspw. erfolgen, indem die Winkel $\vartheta$ der Menge $\vartheta_{12}^{z}$ und die Winkel $\phi$ der Menge $\phi_{13}$ und/oder der Menge $\phi_{14}^{x}$ mit der Beziehung (1) in Einheitsrichtungsvektoren $d(\phi,\vartheta)$ umgerechnet werden und unter Verwendung des Skalarprodukts $\langle d(\phi,\vartheta)|A_3 \rangle = \|A_3\| \cos \vartheta$. Der wahre Azimutwinkel $\phi$ und der wahre Polarwinkel $\vartheta$ können so wiederum bestimmt werden, indem in bspw. der Produktmenge $\vartheta_{12}^{z} \otimes \vartheta_{13}^{z} \otimes \phi_{14}^{x}$ das Tripel $(\vartheta, \vartheta, \phi)$ gesucht wird, welches eine minimale Differenz in den Winkeln $\vartheta$ aufweist, in Symbolen bspw.:

$$\min_{(\vartheta,\vartheta,\phi)\in\vartheta_{12}^{z}\otimes\vartheta_{13}^{z}\otimes\phi_{14}^{x}} |\vartheta \in \vartheta_{13}^{z} - \cos^{-1}\langle d(\phi \in \phi_{14}^{x}, \vartheta \in \vartheta_{12}^{z})|A_3/\|A_3\|\rangle| \qquad (10)$$

Anstelle der Menge $\phi_{14}^{x}$ kann auch die Menge $\phi_{13}$ zum Bestimmen des Minimums nach der Beziehung (10) verwendet werden. In anderen Worten kann die Richtung gewählt werden, für welche die oben genannten Differenzen (Winkeldifferenzen) minimal sind, d.h. die Richtung von den mehreren möglichen Richtungen, die am besten zu zwei an verschiedenen Antennenpaaren gemessenen Phasendifferenzen passt. Die Mehrdeutigkeit des Azimutwinkels $\phi$ kann zuerst aufgelöst werden, dann die Mehrdeutigkeit des Polarwinkels $\vartheta$.

Die obigen Verfahren können auf beliebige Anordnungen von vier Antennen angewendet werden. Beliebige Anordnungen entsprechen dem Fall, dass die Position $A_4$ des Antennenelements m = 4 in der xz-Ebene liegt. Für beliebige Anordnungen ergibt sich für die möglichen Winkel $\phi$ die Menge

$$\phi_{14} := \left\{ \phi = \cos^{-1}\left( \frac{\left( (\psi_{14} + 2\pi\rho_{14}) \frac{\lambda}{2\pi} - (A_4)_z \cos \vartheta \right)}{(A_4)_x \sin \vartheta} \right); \rho_{14} \in P_4 \right\} \qquad (11)$$

Anstelle der Mengen $\phi_{14}^{x}$ und $\phi_{13}$ kann auch die Menge $\phi_{14}$ zum Bestimmen des Minimums nach der Beziehung (8) und/oder der Beziehung (10) verwendet werden.

Mit den oben beschriebenen Verfahren können auch Antennenanordnungen mit mehr als vier Antennenelementen beschrieben werden. Dabei erweist es sich zur Reduktion des Rechenaufwandes als vorteilhaft, dass die Positionen der Antennenelemente auf einer Achse des Koordinatensystems liegen, oder daraufgelegt werden, wie oben mit Bezug zu den Beziehungen (9) und (10) beschrieben.

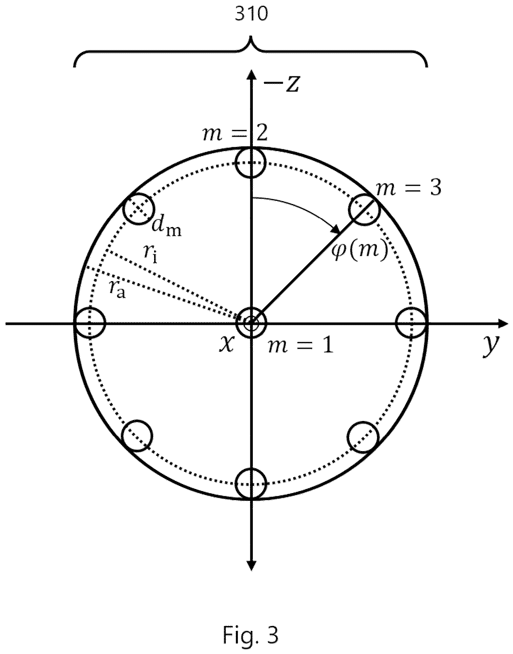

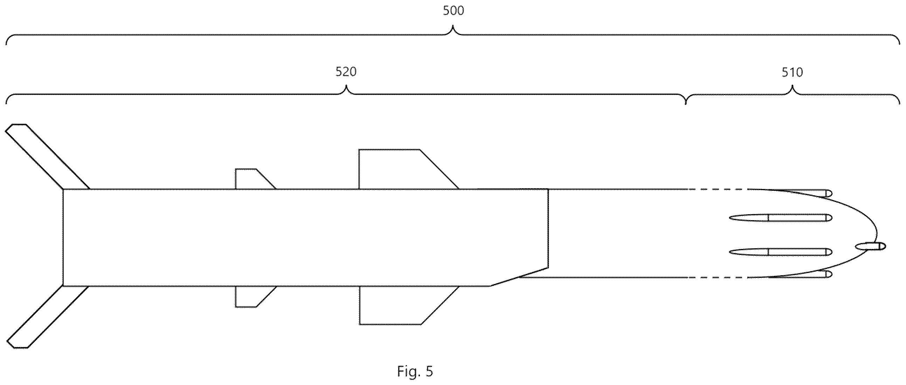

Fig. 3 zeigt eine Frontansicht einer beispielhaften Antennenanordnung 310 mit Antennenelementen auf einem Kopf eines Körpers und außerhalb des Körpers, beispielsweise eines Flugkörpers 500 wie in Fig. 5 gezeigt. Der Kopf des Körpers weist ohne Beschränkung der Allgemeinheit (oBdA) eine Rotationssymmetrie auf, d.h. er kann kreisförmig sein, wenn von vorne, entlang einer Rotationsachse x betrachtet. Der Kopf des Körpers kann bspw. auch ellipsenförmig sein, wenn von vorne entlang der Rotationsachse x betrachtet.

Wie in der Fig. 3 gezeigt, umfasst die Antennenanordnung eine Vielzahl *M* von Antennenelementen *m* mit $1 \leq m \leq M$. Die Vielzahl M kann eine gerade oder eine ungerade ganze Zahl sein, beispielsweise 4, 5, 6, 7, 8, 9, 10, 11, 12, 13, 14, 16, 17 oder 18, insbesondere 4 oder mehr als 4. Die Antennenelemente können identisch oder unterschiedlich sein. Bspw. können *S* Antennenelemente zum Senden, *E* Antennenelemente zum Empfangen und *B* Antennenelemente zum bidirektionalen Senden *und* Empfangen von elektromagnetischer Strahlung konfiguriert sein. Die Vielzahl *M* von Antennenelementen *m* kann bspw. 0, 2, 4, oder 8 Antennenelemente zum Senden sowie 16, 14, 12, oder 8 Antennenelemente zum Empfangen umfassen, insgesamt jeweils 16 Antennenelemente. Die Vielzahl *M* von Antennenelementen kann auch 4 Antennenelemente zum Senden und 14 Antennenelemente zum Empfangen umfassen, insgesamt 16 Antennenelemente, also 2 Antennenelemente zum Senden und zum Empfangen. Andere Kombinationen sind auch möglich, insbesondere der Fall, dass alle Antennenelemente zum Senden und zum Empfangen konfiguriert sind, *B = M.* Antennenelemente können sich zumindest bei der Drehrichtung der Polarisation unterscheiden und ansonsten identisch sein.

Die Antennenelemente zum Senden und die Antennenelemente zum Empfangen können in Gruppen aufeinanderfolgend auf dem Körper oder dem Kopf des Körpers angeordnet sein, bspw. 2 der Vielzahl *S* und 14 der Vielzahl *E*; oder 4 der Vielzahl *S* und 12 der Vielzahl *E*; oder 4 der Vielzahl *S*, 4 der Vielzahl *E*, 4 der Vielzahl *S*, 4 der Vielzahl *E*; oder abwechselnd 1 der Vielzahl *S* und 1 der Vielzahl *E*. Die bspw. 16 Antennenelemente können auch alle zum Senden und/oder Empfangen konfiguriert sein. Die Konfiguration zum Senden kann die Konfiguration zum Empfangen ausschließen und *vice versa.* Im Falle einer reinen Empfangsanordnung, wenn alle Antennenelemente zum Empfangen konfiguriert sind und kein Antennenelement zum Senden konfiguriert ist, kann die Antennenanordnung bspw. von einem Zielobjekt reflektierte Radarwellen empfangen, die von einem Sender auf das Zielobjekt abgestrahlt worden sind.

Die Antennenelemente können insbesondere zum Senden und/oder Empfangen von elektromagnetischer Strahlung für Radaranwendungen konfiguriert sein. Die Antennenelemente können auch zum Senden und/oder zum Empfangen in unterschiedlichen Frequenzbereichen konfiguriert sein.

Die Vielzahl *M* von Antennenelementen m kann rotationssymmetrisch auf einem Kreis mit Radius $r_i$, in einer Ebene senkrecht zu Rotationsachse *x* des Kopfes von bspw. dem Flugkörper angeordnet sein. Die Position der Antennenelemente kann bspw. durch einen Rotationswinkel $\varphi(m)$ mit $1 \leq m \leq M$ dargestellt werden. Der Rotationswinkel $\varphi(m)$ für das Antennenelement *m* kann durch die Beziehung $\varphi(m) = (m - 1) \times \Delta\varphi$, mit $\Delta\varphi = 360°/M$ gegeben sein. Für die Vielzahl *S* und die Vielzahl *E* sind unterschiedliche Rotationswinkel möglich, bspw. so, dass die Abstände der Antennenelemente unterschiedlich und/oder ein ganzzahliges Vielfaches einer Frequenz einer einfallenden elektromagnetischen Welle, insbesondere im Bereich der Radarwellen, sind. Wie in der Fig. 3 gezeigt, ist der Radius $r_i$ kleiner als ein Radius des Flugkörpers $r_a$, wenn oBdA der Fall von konzentrischen Kreisen als Form des Flugkörpers (äußerer, solider Kreis in Fig. 3) und der Anordnung der Antennenelemente (innerer, gepunkteter Kreis in Fig. 3) betrachtet wird. Ein Radius $d_m/2$ von einem, von mehreren, oder von allen der Antennenelemente m kann kleiner, gleich, oder größer als die Differenz $r_a - r_i$ der Radien $r_a$ und $r_i$ sein. Die Lage der Antennenelemente am Rand des Kopfes des Körpers kann bspw. ein vergrößertes Sichtfeld ermöglichen.

Die Antennenelemente kann beliebig, in einer nicht-koplanaren Anordnung angeordnet sein. Die Anordnung kann bevorzugt keine nicht-triviale Symmetrie aufweisen. Eine Symmetrie der Anordnung ist eine Operation, durch welche die Positionen der Antennenelemente der Anordnung auf sich selbst abgebildet werden.

Die Anordnung kann an einer beliebigen Stelle des Körpers angeordnet sein. Eine Platzierung auf dem Kopf des Körpers ist nicht erforderlich. Die Antennenelemente der Anordnung können konform oder nicht-konform angeordnet sein, bspw. an oder bei einem Rumpf und/oder einem Heck eines Körpers.

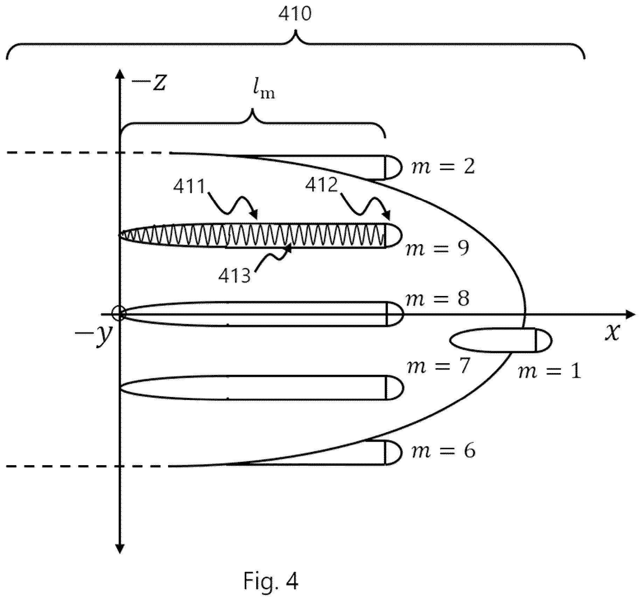

Fig. 4 zeigt eine Seitenansicht einer beispielhaften Antennenanordnung 410 mit Antennenelementen, die auf einem Kopf eines Körpers außerhalb des Körpers, beispielsweise eines Flugkörpers 500 wie in Fig. 5, angeordnet sind. Der Kopf des Körpers weist oBdA eine hyperbolische Form auf, wenn seitlich, entlang einer Achse *y* betrachtet, die orthogonal zu einer Achse *x* ist. Der Kopf des Körpers kann bspw. auch die Form eines Kreises oder eines Dreiecks aufweisen, wenn seitlich, entlang einer Achse *y* betrachtet.

Wie mit Bezug zur Fig. 3 im Detail beschrieben umfasst die Antennenanordnung eine Vielzahl $M$ von Antennenelementen $m$ mit $1 \leq m \leq M$. Zur Vereinfachung der Beschreibung ist in Fig. 4 ein Beispiel mit 9 Antennenelementen veranschaulicht. Alternative Lösungen, die ausnahmslos mit dem Beispiel in Fig. 4 kombinierbar sind, und *vice versa,* sind mit Bezug zur Fig. 3 im Detail beschrieben.

Jedes der Antennenelemente m kann ein Radom (aus dem Englischen *"radar dome"* abgeleitet) mit einem Gehäuse 411 und eine Spitze 412 umfassen. Das Gehäuse kann einen Durchmesser (vgl. $d_m$ in Fig. 3) im Bereich von 5 bis 30 mm aufweisen, vorzugsweise 10 bis 20 mm, noch bevorzugter 12 bis 15 mm. Das Gehäuse 411 kann eine Länge $l_m$ von 30 bis 150 mm aufweisen, vorzugsweise 50 bis 120 mm, noch bevorzugter 70 bis 100 mm. Das Radom kann vollständig oder zumindest teilweise, außerhalb des Kopfes des Körpers angeordnet sein, um ein Volumen eines verfügbaren Raumes innerhalb des Kopfes des Körpers zu erhöhen. Jedes der Antennenelemente m kann ferner eine Antenne 413 aufweisen. Die Antenne 413 kann eine Helixantenne sein, die zum Senden und/oder Empfangen von zirkular polarisierter elektromagnetischer Strahlung konfiguriert ist. Andere, in eine Richtung, bspw. in die x-Richtung, ausgedehnte Antennen, die zum Senden und/oder Empfangen von zirkular polarisierter elektromagnetischer Strahlung konfiguriert sind, sind ebenfalls möglich. Die Antenne 413 kann bspw. eine Helix um einen Zylinder, einen Konus, ein Ellipsoid, usw. bilden. Die Antenne 413 kann eine Richtcharakteristik aufweisen (nicht gezeigt), die in eine Abstrahlrichtung rotationssymmetrisch ist.

Die Antenne 413 kann im Radom angeordnet sein. Insbesondere kann eine Länge der Antenne 413 kleiner als die Länge $l_m$ des Radoms sein, so dass die Antenne 413 im Radom vollständig außerhalb des Kopfes des Körpers angeordnet werden kann.

Form und Material können für jedes einzelne Radom einer Antenne 413 unabhängig von Form und Material des Kopfes des Körpers sein, um eine optimale Leistung der Antenne 413 zu ermöglichen. Verluste und/oder Verzerrungen beim Senden und Empfangen eines Radarsignals können dadurch minimiert werden. Form und Material der jeweiligen Radome können auch an die Konfiguration der Antenne 413 angepasst sein (Senden, Empfangen, Senden und Empfangen).

Aufgrund der Form der Antennenelemente und der Dimensionierung der jeweiligen Antenne 413 können die Antennenelemente auf dem Kopf eines Flugkörpers 500 wie in Fig. 5 angebracht werden, so dass im Inneren des Kopfes oder des Flugkörpers insgesamt Raum für bspw. ein zweites Instrument zum Lenken des Flugkörpers frei wird. Das zweite Instrument kann ein optischer Suchkopf sein wie bspw. ein Suchkopf zum Erfassen von elektromagnetischer Strahlung im Frequenzbereich des Infraroten. Antennenanordnungen gemäß der vorliegenden Offenbarung können somit die Verwendung von mehreren Suchköpfen ermöglichen, um ein Lenken des Flugkörpers zu verbessern, während eine umfassende Änderung der Form des Flugkörpers nicht erforderlich ist.

Jede Antenne 413 kann konfiguriert sein, um Strahlung mit derselben links- oder rechtsdrehenden zirkularen Polarisation zu erzeugen, unabhängig von einer relativen Position und Lage der Antennenelemente $m$. Dadurch kann ein abgestrahltes und zurückgestreutes Radarsignal von jeder Sendeantenne ohne Polarisationsverluste von jeder Empfangsantenne empfangen werden. Polarisationsverluste bezeichnen hierbei Verluste, die durch unterschiedliche Polarisationen verursacht sind.

Fig. 5 zeigt eine Seitenansicht eines Flugkörpers 500 mit einer Antennenanordnung 510 und einem Rumpf 520. Der Rumpf 520 kann ein einstufiges, zweistufiges oder mehrstufiges Antriebsmodul umfassen. Eine oder mehrere der Antriebsstufen des Antriebsmoduls können abwerfbar sein. Die Antennenanordnung 510 kann ein oder mehrere Submodule umgeben. Die Antennenanordnung 510 kann bspw. ein aktives oder ein passives Radar, einen oder mehrere Effektoren, eine Steuerung und/oder Mittel zur drahtlosen Kommunikation umgeben. Insbesondere kann eine Antennenanordnung 510 eine Vielzahl von Antennenelementen umfassen, wie mit Bezug zur Fig. 3 und Fig. 4 im Detail beschrieben.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

BEZUGSZEICHENLISTE

| | |
|---|---|
| x10 | Antennenanordnung (x =3, 4 oder 5) |
| 411 | Gehäuse eines Radoms eines Antennenelementes *m* |
| 412 | Spitze eines Radoms eines Antennenelementes *m* |
| 413 | Antenne eines Antennenelementes *m* |
| 500 | Flugkörper |
| 520 | Rumpf des Flugkörpers 500 |

**Patentansprüche**

1. Antennenanordnung (310; 410; 510) umfassend:

   ein erstes Antennenelement, ein zweites Antennenelement, ein drittes Antennenelement, und ein viertes Antennenelement, die nicht-koplanar angeordnet und zum Detektieren von Signalen von einer einfallenden elektromagnetischen Welle konfiguriert sind; und
   einen Prozessor, der zum Bestimmen einer Einfallsrichtung der elektromagnetischen Welle unter Verwendung der detektierten Signale konfiguriert ist.

2. Antennenanordnung (310; 410; 510) nach Anspruch 1, wobei

   das erste Antennenelement und das zweite Antennenelement auf einer ersten Achse eines Koordinatensystems zum Bestimmen der Einfallsrichtung der elektromagnetischen Welle liegen;
   das erste Antennenelement und das vierte Antennenelement auf einer zweiten Achse des Koordinatensystems liegen; und
   die erste Achse und die zweite Achse orthogonal zueinander sind.

3. Antennenanordnung (310; 410; 510) nach irgendeinem der Ansprüche 1 bis 2, wobei ein Abstand des zweiten Antennenelements vom ersten Antennenelement und ein Abstand des vierten Antennenelements vom ersten Antennenelement unterschiedlich sind.

4. Antennenanordnung (310; 410; 510) nach irgendeinem der Ansprüche 1 bis 3, wobei das erste Antennenelement im Ursprung eines Koordinatensystems zum Bestimmen der Einfallsrichtung der elektromagnetischen Welle liegt und das zweite Antennenelement, das dritte Antennenelement, und das vierte Antennenelement in dem Koordinatensystem Koordinaten aufweisen, die jeweils ein ganzzahliges Vielfaches einer Wellenlänge der elektromagnetischen Welle sind.

5. Antennenanordnung (310; 410; 510) nach Anspruch 4, wobei die ganzzahligen Vielfachen für jede Koordinate kleiner als 20 und vorzugsweise größer als 1 sind.

6. Antennenanordnung (310; 410; 510) nach irgendeinem der Ansprüche 1 bis 5, wobei die Abstände des zweiten, dritten und vierten Antennenelements vom ersten Antennenelement alle unterschiedlich sind.

7. Verfahren (6000) zum Bestimmen einer Einfallsrichtung einer elektromagnetischen Welle unter Verwendung der Antennenanordnung (310; 410; 510) nach irgendeinem der Ansprüche 1 bis 6, umfassend:

   Bestimmen (6100) eines jeweiligen Abstandes zwischen einer Position des ersten Antennenelements und einer Position des ersten, des zweiten und des dritten Antennenelements;
   Bestimmen (6200) von möglichen Mehrdeutigkeiten einer jeweiligen Differenz einer Phase der elektromagnetischen Welle an der Position des ersten Antennenelements und einer Phase der elektromagnetischen Welle an der Position des ersten, des zweiten und des dritten Antennenelements basierend auf dem bestimmten jeweiligen Abstand;
   Bestimmen (6300) von möglichen Polarwinkeln und möglichen Azimutwinkeln für die Einfallsrichtung der elektromagnetischen Welle unter Berücksichtigung der möglichen Mehrdeutigkeiten; und
   Bestimmen (6400) eines Tupels der möglichen Azimutwinkel und der möglichen Polarwinkel für welches entweder eine Differenz zwischen zwei Azimutwinkeln für einen Polarwinkel verschwindet oder eine Differenz zwischen zwei Polarwinkeln für einen Azimutwinkel verschwindet.

8. Verfahren (6000) nach Anspruch 7, wobei das Bestimmen von möglichen Polarwinkeln und möglichen Azimutwinkeln für die Einfallsrichtung der elektromagnetischen Welle unter Berücksichtigung der möglichen Mehrdeutigkeiten umfasst:

Bestimmen der möglichen Polarwinkel für das zweite Antennenelement;
Bestimmen der möglichen Azimutwinkel für das dritte Antennenelement unter Verwendung der möglichen Polarwinkel für das zweite Antennenelement; und
Bestimmen der möglichen Azimutwinkel für das vierte Antennenelement unter Verwendung der möglichen Polarwinkel für das zweite Antennenelement.

9. Verfahren (6000) nach Anspruch 7, wobei:

das Bestimmen von möglichen Mehrdeutigkeiten ferner umfasst: Bestimmen der möglichen Mehrdeutigkeiten für das dritte Antennenelement mit einer Bestimmung, dass das dritte Antennenelement auf einer neuen Achse des Koordinatensystems zum Bestimmen der Einfallsrichtung der elektromagnetischen Welle liegt;
das Bestimmen von möglichen Polarwinkeln und möglichen Azimutwinkeln für die Einfallsrichtung der elektromagnetischen Welle unter Berücksichtigung der möglichen Mehrdeutigkeiten umfasst: Bestimmen der möglichen Polarwinkel für das dritte Antennenelement bezüglich der neuen Achse, und Umrechnen der möglichen Polarwinkel für das dritte Antennenelement in Polarwinkel im ursprünglichen Koordinatensystem zum Bestimmen der Einfallsrichtung der elektromagnetischen Welle oder Umrechnen der möglichen Polarwinkel für das zweite Antennenelement in Polarwinkel bezüglich der neuen Achse des Koordinatensystems zum Bestimmen der Einfallsrichtung der elektromagnetischen Welle; und
das Bestimmen des Tupels umfasst: Bestimmen einer Differenz der möglichen Polarwinkel für das zweite Antennenelement und der möglichen Polarwinkel für das dritte Antennenelement unter Berücksichtigung der möglichen Azimutwinkel für das dritte Antennenelement und/oder der möglichen Azimutwinkel für das vierte Antennenelement.

10. Verfahren (7000) zum Bestimmen einer Einfallsrichtung der elektromagnetischen Welle unter Verwendung der Antennenanordnung (310; 410; 510) nach irgendeinem der Ansprüche 1 bis 6, umfassend:

mehrdeutiges Berechnen (7100) von Polarwinkeln basierend auf einem ersten Antennenpaar der Antennenanordnung (310; 410; 510) in einem ersten Koordinatensystem für die Antennenanordnung (310; 410; 510);
mehrdeutiges Berechnen (7200) von Azimutwinkeln für jeden möglichen Polarwinkel, einmal basierend auf einem zweiten Antennenpaar der Antennenanordnung (310; 410; 510) und einmal basierend auf einem dritten Antennenpaar der Antennenanordnung (310; 410; 510), wobei jedes Antennenpaar eine erste Antenne umfasst;
für jeden möglichen Polarwinkel, Auflösen (7300) der Mehrdeutigkeiten in den Azimutwinkeln durch Wählen eines Azimutwinkels, so dass der Abstand zwischen den mit dem zweiten Antennenpaar berechneten Azimutwinkeln und mit dem dritten Antennenpaar berechneten Azimutwinkeln minimiert wird;
mehrdeutiges Berechnen (7400) der Polarwinkel basierend auf dem zweiten Antennenpaar in einem zweiten Koordinatensystem mit einer z-Achse durch die Positionen der Antennen des zweiten Antennenpaares;
Umrechnen (7500) der zuvor bestimmten Tupels aus Azimut und Polarwinkel im ersten Koordinatensystem in Polarwinkel im zweiten Koordinatensystem;
Auflösen (7600) der Mehrdeutigkeit des Polarwinkels durch Wählen des Polarwinkels, so dass ein Abstand zwischen den mit dem ersten Antennenpaar und den mit dem zweiten Antennenpaar bestimmten Polarwinkeln minimiert wird; und
Wählen (7700) des so gewählten Polarwinkels im ersten Koordinatensystem und des zugehörigen zuvor bestimmten Azimutwinkels im ersten Koordinatensystem als die Einfallsrichtung.

11. Flugkörper (500), umfassend:
die Antennenanordnung (510) nach irgendeinem der Ansprüche 1 bis 6.

Fig. 1

Fig. 2

Fig. 3

Fig. 4

Fig. 5

6000

```
┌─────────────────┐
│      6100       │
└─────────────────┘
         │
         ▼
┌─────────────────┐
│      6200       │
└─────────────────┘
         │
         ▼
┌─────────────────┐
│      6300       │
└─────────────────┘
         │
         ▼
┌─────────────────┐
│      6400       │
└─────────────────┘
```

Fig. 6

7000

Fig. 7

Europäisches
Patentamt

European
Patent Office

Office européen
des brevets

# EUROPÄISCHER RECHERCHENBERICHT

**Nummer der Anmeldung**

EP 24 21 3439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 225 949 B1 (GUARD GLENN B [US]) 1. Mai 2001 (2001-05-01) * Spalte 3, Zeile 38 - Spalte 8, Zeile 62 * * Abbildungen 1-8 * * Zusammenfassung * - - - - - | 1-11 | INV. G01S3/46 G01S3/04 H01Q21/20 ADD. H01Q21/28 |
| X | US 6 195 043 B1 (AZZARELLI TEODORO [US] ET AL) 27. Februar 2001 (2001-02-27) | 1-6,11 | |
| A | * Spalte 4, Zeile 21 - Spalte 12, Zeile 51 * * Abbildungen 3-8 * * Zusammenfassung * - - - - - | 7-10 | |
| A | US 5 574 468 A (ROSE CONRAD M [US]) 12. November 1996 (1996-11-12) * Spalte 5, Zeile 32 - Spalte 8, Zeile 11 * * Abbildungen 1b-2b * * Zusammenfassung * - - - - - | 1-11 | |

**RECHERCHIERTE SACHGEBIETE (IPC)**

G01S
H01Q

Der vorliegende Recherchenbericht wurde für alle Patentansprüche erstellt

| Recherchenort | Abschlußdatum der Recherche | Prüfer |
|---|---|---|
| München | 15. April 2025 | von Walter, Sven-Uwe |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

# EP 4 600 684 A1

## ANHANG ZUM EUROPÄISCHEN RECHERCHENBERICHT
## ÜBER DIE EUROPÄISCHE PATENTANMELDUNG NR.

EP 24 21 3439

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2025

| Im Recherchenbericht angeführtes Patentdokument | Datum der Veröffentlichung | Mitglied(er) der Patentfamilie | Datum der Veröffentlichung |
|---|---|---|---|
| US 6225949 B1 | 01-05-2001 | KEINE | |
| US 6195043 B1 | 27-02-2001 | US 6195043 B1<br>WO 0239548 A1 | 27-02-2001<br>16-05-2002 |
| US 5574468 A | 12-11-1996 | KEINE | |

EPO FORM P0461

Für nähere Einzelheiten zu diesem Anhang : siehe Amtsblatt des Europäischen Patentamts, Nr.12/82

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006081050 A1

**In der Beschreibung aufgeführte Nicht-Patentliteratur**

- **LY, P. Q. C.** Fast and unambiguous direction finding for digital radar intercept receivers. *Doktorarbeit*, 2013